# EUROPEAN PATENT APPLICATION

(11) **EP 3 912 750 A1**
(43) Date of publication of application: **24.11.2021**
(21) Application number: 20175389.4
(22) Date of filing: 19.05.2020
(51) Int. Cl.: B22F 3/00, B22F 3/105, B33Y 50/02

(54) **A METHOD OF CONTROLLING A BINDER JET PRINTER, AND A CONTROL UNIT THEREFORE**

(71) Applicant: Sandvik Machining Solutions AB, 811 81 Sandviken (SE)
(72) Inventor: BOSTRÖM, Magnus, 811 81 Sandviken (SE); AMNEBRINK, Mikael, 811 81 Sandviken (SE)
(74) Representative: Sandvik

(57) **Abstract**

A method of controlling a binder jet printer, wherein the binder jet printer comprises a build box with a powder bed, and a powder supply for supplying the powder bed with powder. The binder jet printer further comprises a leveling device configured to level the powder supplied to the build box from the powder supply, a print head for dispensing binder to the powder bed such that a green body is formed by the dispensed binder and the powder in the powder bed. The method comprises: supplying powder to the powder bed from the powder supply and leveling the powder with the leveling device; dispensing binder by means of the print head to the powder bed to form a layer of said green body, wherein the layer comprises at least one shape, which at least one shape comprises binder and powder and is delimited by at least one edge, wherein the at least one shape has a saturation of dispensed binder in an area closer to any one edge that is higher than the saturation of dispensed binder in an area further away from any one edge of the at least one shape.

## Description

### TECHNICAL FIELD

The subject matter disclosed herein relates to additive manufacturing, and more particularly, to a method for controlling a binder jet printer, and a method therefore.

### BACKGROUND

Additive manufacturing, also known as 3D printing, generally involves building an object one layer at a time using specialized systems. In particular, a layer of a material may be deposited on a previous layer in a build chamber and the layers are subsequently bound together. Additive manufacturing may be used to manufacture articles from computer-aided design models using techniques such as, but not limited to, selective laser melting (SLM) or binder jet 3D printing. These additive manufacturing techniques melt or physically bind powder particles to form the desired object. Additive manufacturing may facilitate manufacturing of complex articles and enable flexibility for customization of articles compared to techniques such as molding. Additionally, additive manufacturing can reduce the overall manufacturing cost associated with generating these complex articles compared to techniques commonly used in the art.

In some additive manufacturing techniques such as binder jetting (binder jet printing) the printing process involves a step of leveling the supplied powder in the build chamber. This leveling is often performed with a roller that is moved over the working surface, which is in the x-y plane of the build box, with the roller rotating in an opposite direction, forming a powder bed in the build chamber. After the step of leveling, a step of dispensing binder, comprising for example at least one binding agent and a solvent, or at least one reactant and a solvent, to the leveled powder bed follows. These powder supply, leveling and binder dispensing steps form a green body, growing in the z direction of the build box for each layer in the build chamber. The dispensing of binder is performed by a print head that traverses over the powder bed in the x direction and supplies the binder to the powder bed in the form of droplets ejected from a plurality of nozzles arranged in the print head. The print head is controlled by a controller, such that the print head is moved over the powder bed by means of actuators, such as for example stepper motors and servos. Electric pulses are sent from the controller to the nozzles at a given interval causing each of them to eject a droplet with a volume of about 10-100 picoliters. The total amount of binder dispensed onto each part of the powder bed is controlled by the print head traverse speed, droplet volume, droplet ejection frequency and by the number of times the print head traverses back and forth over the powder bed in one layer. For each ejection pulse, the individual nozzles can either be open or closed, thus controlling the total amount of binder dispensed in a certain region. The droplet volume can also be controlled by the pulse design.

As the nozzles are distanced apart in the y direction, typically 30-200 µm, the print head can be moved slightly in the y direction between each traverse over the powder bed to avoid creating lines of binder with dry powder in between.

In the art, the target binder saturation level is set for the whole build process so that it remains the same throughout the whole layer.

The binder saturation is defined as the volume percentage of the void between the powder particles and in the open porosity within the particles that corresponds to the dispensed volume binder into that given volume of voids. At a binder saturation of 100%, the dispensed binder volume equals the volume of all the available void between the powder particles and within the open porosity of the powder particles in a volume element of a printed green body. The binder saturation referred to here is thus the dispensed volume of binder in relation to the available void. Typically, the saturation level is between 30 and 120%. The reason for the possibility of a saturation higher than 100% is that some of the solvent in the binder can evaporate after the binder has been ejected from the print head.

The dispensed binder soaks into the powder bed and the solvent starts to evaporate, so called in-process drying or evaporation, which is often accelerated by using an irradiation source such as a heat lamp or the like. The solvent is needed to lower the viscosity of the binder so that it can be ejected properly from the nozzles without clogging, and also soak more easily into the powder. After soaking, however, it is desired that some of the solvent in the binder is evaporated in order to facilitate the formation of the subsequent layer. If the top layer is too wet, i.e. still contains too much solvent, it might bleed through the subsequently spread layer and wet the levelling device, causing dry powder to adhere to it. This would have a detrimental effect on the printing process.

The cycle controlled by the controller for each deposited layer comprises the following steps:
- Recoating/leveling
- Dispensing binder, one or more traverses
- Soaking/drying

By the end of each cycle, the powder layer comprises at least one shape with soaked-in binder. The at least one shape is delimited by at least one edge. For each cycle, these shapes are stacked on top of each other to form the green body in the powder bed.

Binder evaporates to a lesser extent if the surrounding areas are printed with binder. The larger the surrounding area with deposited binder is, the more pronounced is the effect. Typically, this effect is exhibited as wetter areas in the center of sufficiently large printed areas.

Another way of describing this for simple geometries is that binder in a region further away from an edge of each shape evaporates slower compared to the binder closer to an edge of the shape. This is because the printed green body closer to the edges locally has a lower vapor pressure of the solvent above the print bed. To a lesser extent solvent can also escape in the gas phase through the surrounding dry powder bed. These wetter regions may cause the above described problems associated with binder bleeding through the subsequently spread layer. Furthermore, the curing time of the finished green body in order to remove the solvent from the binder before the sintering is dependent on the amount of solvent left in the green body. With more solvent left in the green body, a longer curing time may be necessary.

There is therefore a need for an improved method of controlling a binder jet printer that obviates or mitigates the above discussed problems with known binder jet methods.

### SUMMARY

The present inventor has recognized that the conventional dispensing of binder to a powder bed outlined above have the disadvantage that the printed green body often exhibits a region further away from an edge that has more unevaporated solvent left in the printed green body than regions closer to an edge of the green body, due to the higher solvent evaporation rate closer to the edge. These higher amounts of remaining solvent can often cause the binder to bleed through the subsequently spread layer.

With the methods known in the art, solving this problem by reducing the binder saturation risks causing the regions closer to an edge getting an insufficient amount of binder, which will lead to a more fragile green body that has a higher risk of being damaged during depowdering and handling.

Having recognized these drawbacks, the present inventor has devised a method of controlling a binder jet printer, wherein the binder jet printer comprises a build box with a powder bed. The binder jet printer further comprises a powder supply for supplying the powder bed with powder, and a leveling device configured to level the powder supplied to the build box from the powder supply. The powder supply can be of various types. Two common powder supply types are push feed and hopper feed. In push feed there is a supply chamber next to the build chamber. The bottom of the supply chamber moves in the positive z direction during printing, i.e. in the opposite direction to that of the bottom of the build chamber, which is moving in the negative z direction during printing. The supply chamber bottom is thus pushing powder up above the build box edge so that the leveling device can distribute it over to the build box. In hopper feed, the powder supply is arranged above the build box and releases the powder down to the build box by means of sieving, oscillation, a gear wheel or the like. In hopper feed there is also need for a leveling step in order to further distribute the powder to the wanted layer thickness.

The binder jet printer further comprises a print head for dispensing binder to the powder bed such that a green body is formed by the dispensed binder and the powder in the powder bed. The method comprises supplying powder to the powder bed by means of the powder supply and leveling the powder with the leveling device. The method further comprises dispensing binder by means of the print head to the powder bed to form a layer of said green body, wherein the layer comprises at least one shape.

The shape is defined as the geometry of the printed layer in the x-y plane, and the shape is thus the area in which binder is deposited. Layer by layer, the shapes together define the printed green body. The edge in the context of this invention is the border between a printed area (i.e. an area on which binder is deposited) and a non-printed area (i.e. an area on which no binder is deposited). As the geometry of the printed green body can be decided arbitrarily within the limits of the resolution of the binder jet printer, the shape referred to in the context of this invention can have several edges delimiting the printed area from a non-printed area.

The powders used in the context of this invention are preferably cemented carbide, stainless steels, duplex steels, tool steels, nickel-based alloys, tungsten and copper.

In the context of the present invention, the powders used in the printing process are preferably MIM (metal injection molding) powders. More preferably, the powders have a particle size distribution of D90 < 45µm or D90 < 22µm.

The layer thickness in the context of the invention is preferably larger than the maximum powder particle size. More preferably, the layer thickness is ≤ 50µm or ≤ 100µm or ≤ 200µm.

The binders used in the context of this invention are preferably binders that work by entanglement of polymers after evaporation of a solvent or binders that work by a chemical reaction between at least one component, e.g. polyester-forming binders.

The at least one shape comprises binder and powder and is delimited by at least one edge wherein the at least one shape has a binder saturation closer to any one edge of the shape that is higher than the binder saturation further away from any one edge. This way the problem with an overly wet region of the at least one shape is reduced, and the associated process problems.

In the context of the present invention and all its embodiments the distance to any one edge, or the distance to an edge, shall be construed as the distance to the closest edge, whichever that edge may be.

In the context of the present invention and all its embodiments, the binder saturation shall not be construed as including saturation variations on the micro level or between nearby individual points. Micro-level should in this context be construed to relate to distances similar to the distance between adjacent nozzles in the print head. The comparison between binder saturations in different areas of the printed shape should therefore only be done on areas having a size equivalent to a square with the side smaller than about 1-5mm and by comparing the mean saturation for each of those areas.

According to one embodiment, the layer comprises at least one hollow shape said hollow shape comprises binder and powder and is delimited by at least an inner and an outer edge. The at least one hollow shape has a binder saturation closer to any one edge of the hollow shape that is higher than the binder saturation further away any one edge. This way the problem with an overly wet region of the at least one shape is reduced, and the associated process problems.

According to one embodiment, the binder saturation in an area furthest away from any one edge of the at least one shape is 1-99% of the binder saturation closest to any one edge of the at least one shape. This way the binder saturation in an area further away from any one edge may be adjusted such that process problems may be avoided.

In other embodiments, the binder saturation of an area further away from any one edge of the at least one shape can be 5% to 95%, 10-90%, 20-90%, 30-90, 40-90 or 50-90% of the binder saturation of an area closer to any one edge of the at least one shape.

According to one embodiment of the present invention, the predetermined saturation difference between areas closer and further away, respectively, from an edge can be changed by also considering the distance to printed areas in additional shapes in the build box. As previously mentioned, the evaporation of solvent is dependent on the vapor pressure above the at least one shape and to some extent also the distance to dry powder. If a second shape is in the direct vicinity of a first shape, the amount of surrounding dry powder will be lower, and the vapor pressure will be higher above the shape, at the edge of both of those shapes. The difference between the evaporation rate in areas closer and further away from an edge of a shape, respectively, will be smaller and the predetermined difference in saturation in those regions can be decreased accordingly.

According to one embodiment, the binder saturation is constant in a region of the at least one shape extending a predetermined distance from any one edge into the shape.

According to one embodiment, the binder saturation decreases gradually with increasing distance from any one edge of the at least one shape. The gradual decrease of binder saturation may be a linear decrease.

According to one embodiment, the binder saturation changes in a step at a predetermined distance from any one edge of the at least one shape.

According to one embodiment, the binder saturation changes in several steps, each at a predetermined distance from any one edge of the at least one shape so that the binder saturation decreases stepwise with increasing distance from any one edge.

According to one embodiment the binder saturation changes in a raster-like way with increasing distance from an edge.

The present inventor has further devised a control unit for a binder jet printer, wherein the binder jet printer comprises a build box with a powder bed, a powder supply for supplying the powder to the powder bed, a leveling device configured to level the powder supplied to the build box from the powder supply. The binder jet printer further comprises a print head with a binder supply for dispensing binder to the powder bed such that a green body is formed by the dispensed binder and the powder in the powder bed. The control unit is characterized in that the control unit further comprises a dispenser controller connected to the print head and configured to control the dispensing of binder by means of a plurality of nozzles arranged on the print head to the powder bed to form a layer of said green body. The layer comprises at least one shape, which at least one shape comprises binder and powder and is delimited by at least one edge. The at least one shape has a binder saturation in an area closer to any one edge of the shape that is higher than the binder saturation in an area of the shape that is further away from any one edge.

According to one embodiment, the controller is configured to adjust the dispensed amount of binder by means of controlling the electric pulses sent to the nozzles so that some nozzles will be inactive over the areas where less binder is desirable. If, for example, the powder bed is traversed by the print head more than one time in a layer cycle, the nozzles that traverse an area of the at least one shape distanced from an edge by a predetermined distance will be deactivated over that area for at least one of those traverses. After the layer cycle is complete, this area will have received less binder than the area closer to an edge of the at least one closed shape.

According to one embodiment, the controller is configured to release droplets from the nozzles with a lower frequency, i.e. less often or with greater distance in between, over a region further away from any one edge in the at least one shape.

According to one embodiment the amount of deposited binder in each part of the green body is determined from a 2-dimensional measurement of a print bed property. The measured property can be e.g. the grey levels of the printed area in an image or a temperature map.

The controller can be arranged so that the binder amount is calculated during printing as a function of the geometry of the at least one shape. This can be done analyzing the geometry of the at least one shape, determining a region further away from an edge that will have a lower binder saturation than a region closer to any one edge according to the described method.

The controller according to one embodiment receives print instructions that have been generated in a separate computer software, e.g. a slicer software, which incorporates the described method and the controller thus controls the print head to dispense binder accordingly.

According to one embodiment, the electrical pulses from the control unit to the nozzles in the print head are modified so that the volume of the ejected droplets can be varied. Smaller droplets are ejected on an area further away from any one edge compared to the droplets ejected on an area closer to any one edge.

The present inventor has also devised a binder jet printer comprising a build box with a powder bed, a powder supply for supplying the powder bed with powder, a leveling device configured to level the powder supplied to the build box from the powder supply, and a print head for dispensing binder to the powder bed such that a green body is formed by the dispensed binder and the powder in the powder bed. The binder jet printer further comprises a control unit as set out above.

The present inventor has also devised a non-transitory computer readable media having information embodied therein, said information including instructions for a machine to execute the method as set out above.

The present inventor has also devised a non-transitory computer readable media having information embodied therein, said information including instructions for a slicer software to execute the method as set out above.

In this context the term slicer software should be construed to encompass other types of software used to generate code or other types instructions, which, when provided to a machine controller, will control the operation of that machine.

### LIST OF DRAWINGS

Embodiments of the invention will now be explained in detail, by way of example only, with reference to the accompanying figures, in which:
Fig. 1 shows a schematic of a binder jet printer according to an embodiment of the present invention;
Fig. 2 shows a build box from above in which two green bodies are formed according to an embodiment of the present invention;
Fig. 3 shows a build box from above in which a green body is formed according to an embodiment of the present invention, showing nozzles and droplets of different sizes;
Fig. 4 shows a build box from above in which a green body is formed according to an embodiment of the present invention, showing open and closed nozzles;
Fig. 4b shows a build box from above in which a green body is formed according to an embodiment of the present invention, showing open and closed nozzles;
Fig. 5 is a flow diagram illustrating a method according to an embodiment of the present invention;
Fig. 6 shows a graph which illustrates binder saturation in a shape of a green body according to an embodiment of the present invention;
Fig. 7 shows a graph which illustrates binder saturation in a shape of a green body according to an embodiment of the present invention;
Fig. 8 shows a graph which illustrates binder saturation in a shape of a green body according to an embodiment of the present invention; and
Fig. 9 shows a graph which illustrates binder saturation in a shape of a green body according to an embodiment of the present invention
Fig. 10 shows a green body with a hollow shape according to an embodiment of the present invention;
Fig. 11 shows a graph which illustrates binder saturation in a hollow shape of a green body according to an embodiment of the present invention;

### DETAILED DESCRIPTION OF EMBODIMENTS

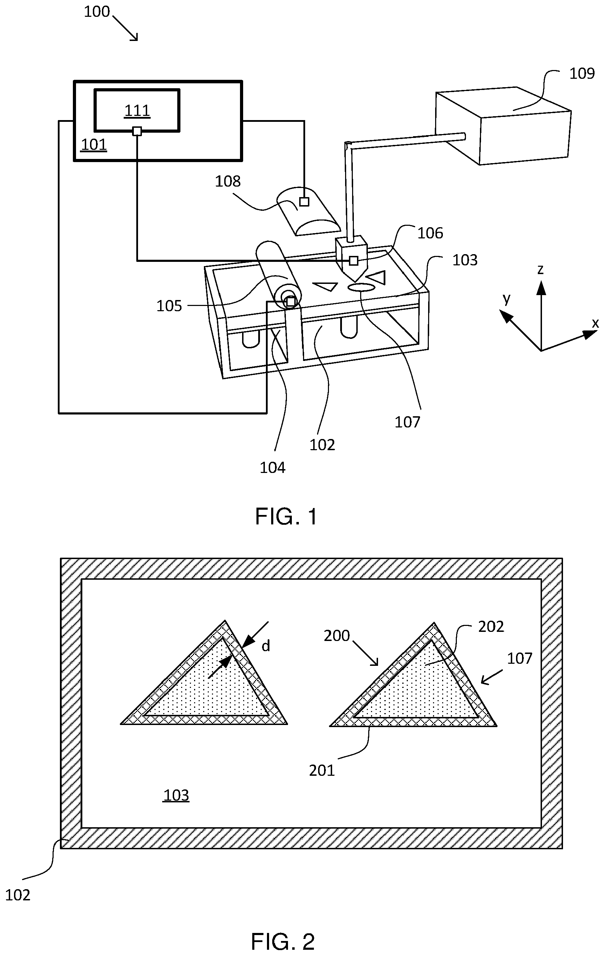

Fig. 1 is a schematic drawing of a binder jet printer, generally designated 100, according to an embodiment of the present invention.

The binder jet printer 100 comprises a build box 102 with a powder bed 103, the build box has a moveable bottom which is configured to gradually be lowered during printing. The print head will always be at the same distance from the leveled powder bed. The binder jet printer 100 further comprises a powder supply 104 for supplying the powder bed with powder, and a leveling device 105 configured to level the powder supplied to the build box from the powder supply. The powder supply also comprises a moveable bottom which gradually rises during printing. When a new layer of powder is about to be formed in the build box, the bottom of the powder supply is lifted a predetermined distance so that the correct amount of powder can be distributed from the powder supply to the build box as a the subsequent layer by means of the leveling device as it traverses from the powder supply over the build bed. The leveling device forms a uniform layer of powder in the build box and thus builds the powder bed one layer at a time, layer by layer. The binder jet printer further comprises a print head 106 for dispensing binder to the powder bed by means of a plurality of nozzles (106a, 106b, 106c, 106d) arranged in the print head such that a green body is formed by the dispensed binder and the powder in the powder bed. The print head 106 is fluidly connected to a binder supply 109.

The binder jet printer 100 further comprises a control unit 101, which comprises a dispenser controller 111 connected to the print head 106 and configured to control the dispensing of binder by means of controlling which nozzles are active for each print head traverses the powder bed 103 in a layer cycle to form a layer of said green body 107, wherein the layer comprises at least one shape 200, as disclosed in Fig. 2.

In Fig. 2 a schematic view from above of a build box 102 is disclosed. The at least one shape 200 comprises binder and powder and is delimited by at least one edge 201. The at least one closed shape has a saturation of dispensed binder in an area closer to any one edge 201 of the shape 200 that is higher than the saturation of dispensed binder in an area further away 202 of the shape 200. The build box 102 has a powder bed 103 that in which the at least one shape 200 is formed.

The binder saturation within this disclosure should be construed as the percentage of the void between and within the powder particles that is filled with binder. At a binder saturation of 100%, the volume of the dispensed binder is equivalent to the available void between and within the powder particles.

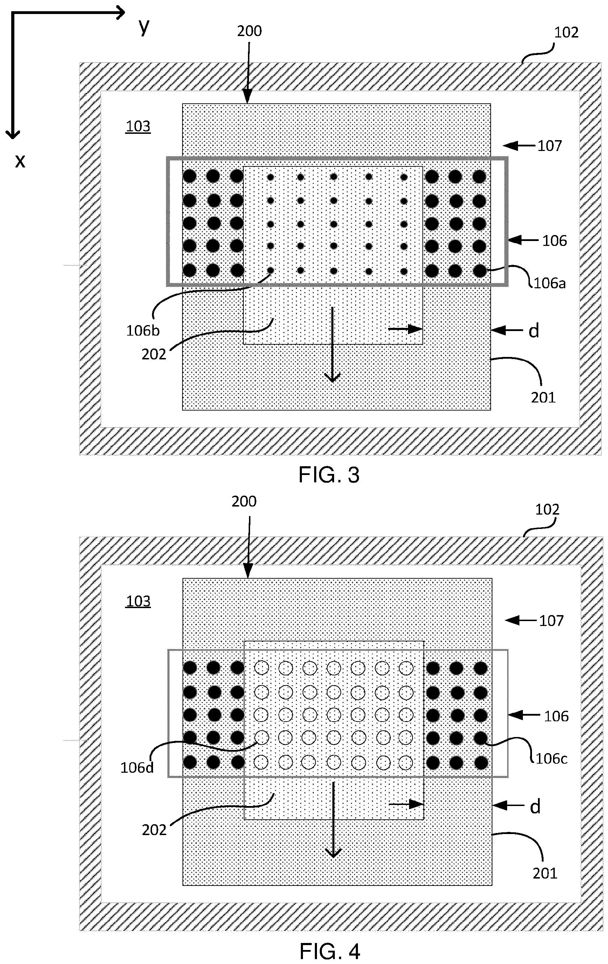

In Fig. 3, a dispenser controller 111 as described above may in one embodiment be configured to adjust the saturation of dispensed binder by means of adjusting the volume of binder in each droplet dispensed to the powder bed by means of the nozzles 106a, 106b in the print head 106. This allows the saturation of binder in the center region 202 to be lower than the saturation of binder in the area within the distance d from the edge 201. Thus, the interior 202 of the closed shape 200 is provided with binder in smaller droplets from some nozzles 106b compared to the droplets provided from other nozzles 106a further away from any one edge of the shape.

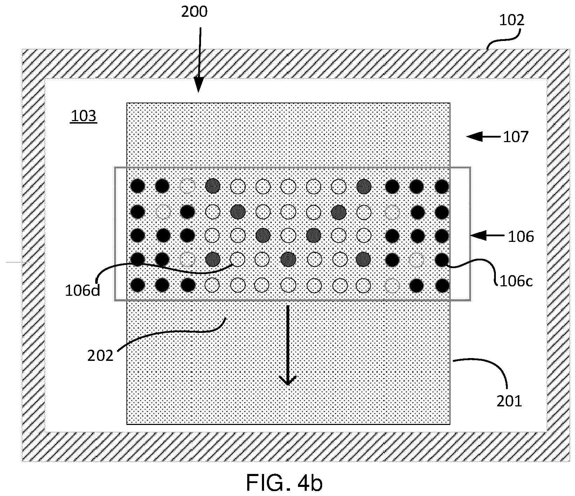

In Fig. 4 and 4b, the dispenser controller 111 may in another embodiment be configured to adjust the saturation of dispensed binder in an area of the green body by means of dispensing a plurality of binder droplets to the same point of the green body. In this embodiment, the print head traverses over the print bed more than one time. In at least one of those traverses, binder is only dispensed to the area within the distance d from the lateral edge, and no binder is dispensed to the area 202 distanced by d or further from the lateral edge 201. This is done by means of the dispenser controller 111 deactivating the nozzles 106d that pass over the area 202 distanced by d from an edge 201, while the other nozzles 106c remain activated. Thus, an area further away 202 of any one edge of the shape 200 is provided with fewer droplets of binder in a layer cycle compared to an area closer to an edge, which is provided with more binder droplets in a layer cycle.

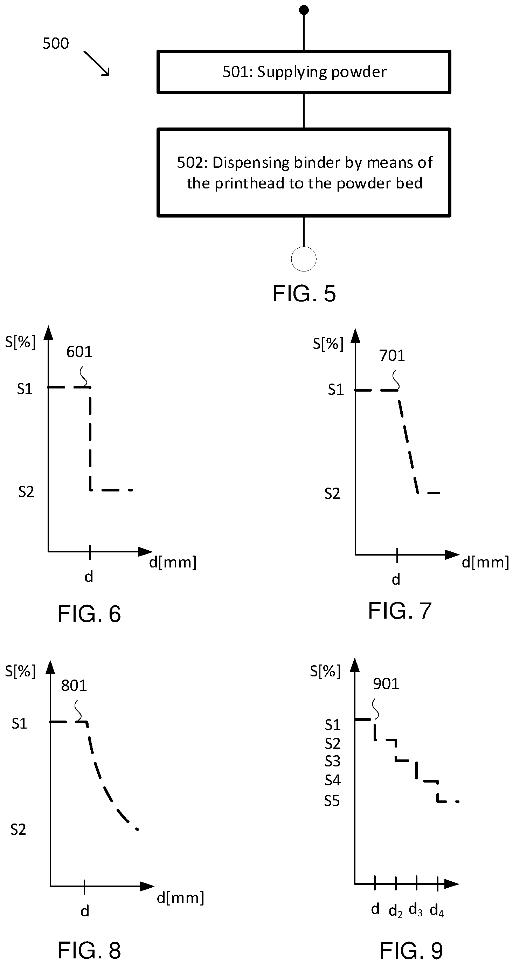

In Fig. 5 a method, generally designated 500, of controlling a binder jet printer 100 is disclosed. The binder jet printer 100 is discussed above with reference made to Fig. 1 and comprises a build box 102 with a powder bed 103, and a powder supply 104 for supplying the powder bed with powder. The binder jet printer 100 further comprises a leveling device 105 configured to level the powder supplied to the build box from the powder supply, and a print head 106 for dispensing binder to the powder bed such that a green body 107 is formed by the dispensed binder and the powder in the powder bed.

The method 500 comprises:
501: Supplying powder to the powder bed from the powder supply 104 and leveling the powder with the leveling device 105.
502: Dispensing binder by means of the print head 106 to the powder bed to form a layer of said green body. The layer comprises at least one shape 200, which at least one shape comprises binder and powder and is delimited by at least one edge 201. The at least one shape has a saturation of dispensed binder closer to any one edge of the shape that is higher than the saturation of dispensed binder in an area further away from any one edge of the shape.

Fig. 6 shows a graph which illustrates one embodiment of binder saturation according to the present invention. The x-axis indicates distance from an edge 201 of the closed shape 200. The y-axis indicates the saturation of binder in percent and this is denoted S[%]. A line 601 indicates the binder saturation in the shape as a function of the distance from an edge 201. The line 601 shows that the binder saturation is constant at a first level S1 from an edge 201 to a distance d. Furthermore, the line 601 indicates that the binder saturation changes in a step at distance d to a second level S2. Thus, the saturation of dispensed binder is constant in a region adjacent to an edge of shape extending a predetermined distance d from the lateral edge 201, as shown in Fig. 2 and discussed hereinabove.

The graph in Fig. 7 differs from the graph shown in Fig. 6 in that a line 701 which indicates the binder saturation decreases gradually starting at distance d, and the gradual decrease of binder saturation is a linear decrease in this embodiment. Thus, at an edge 201 the binder saturation is equal to the first level S1 and remains constant to distance d. The line 701 indicates that the binder saturation gradually decreases from the first level S1 to the second level S2, starting at distance d from an edge.

The graph in Fig. 8 differs from the graph shown in Fig. 6 and 7 in that a line 801 which indicates the binder saturation decreases gradually non-linearly from the position d from an edge 201 of the at least one shape 200. Thus, at the edge 201 the binder saturation is equal to the first level S1 and remains constant to distance d. The line 801 further indicates that the binder saturation gradually decreases non-linearly from the first level S1 to the second level S2 from distance d.

The graph in Fig. 9 differs from the graph shown in Fig. 6, 7 and 8 in that a line 901 which indicates the binder saturation decreases gradually in several steps starting from distance d from an edge 201 of the at least one closed shape 200, the steps subsequently being separated by distance d₂, d₂, d₃ and d₄ from one another. Thus, at the edge 201 the binder saturation is equal to the first level S1 and decreases in steps to S2, S3, S4 and S5 at the above distances.

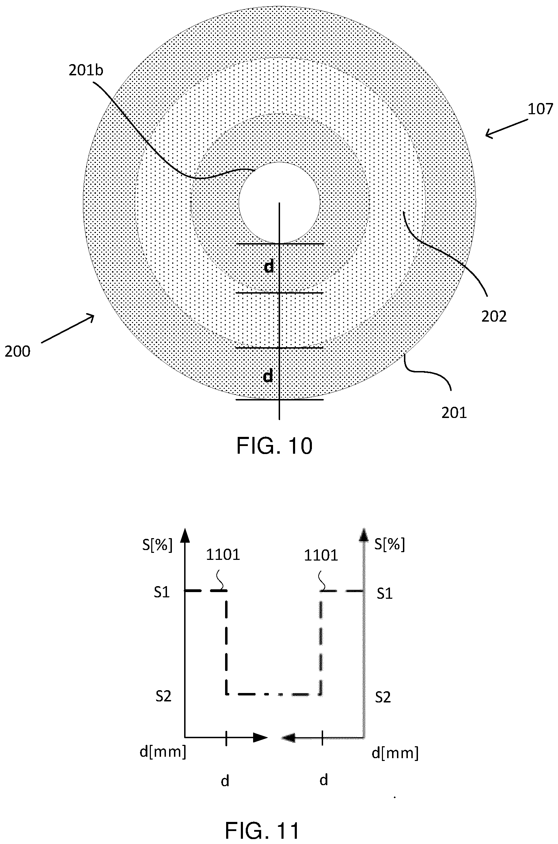

In Fig. 10, a green body comprising a hollow shape is shown. An area further away 202 from any one edge 201 has a lower binder saturation than the areas within the distance d from any one edge.

In Fig. 11 a graph shows two lines 1101 that describe the binder saturation of a shape similar to that shown in Fig. 10 as a function of the distance d from any one edge. In Fig. 11, the change of binder saturation is taken from the example of Fig. 6 but any of the examples in Fig. 6 to Fig. 9 can be used.

In one embodiment of the present invention, the binder saturation in an area further away from an edge of the shape may be 1% to 99% of the binder saturation in an area closer to an edge of the at least one shape. Thus, the second level S2 is 1% to 99% of the first level S1 in Fig. 6 to 9

In one embodiment of the present invention, the binder saturation in an area further away from an edge of the shape may be 5% to 95% of the binder saturation in an area closer to an edge of the at least one shape. Thus, the second level S2 is 5% to 95% of the first level S1 in Fig. 6 to 9.

In further embodiments of the present invention, S2 can be 10-90%, 20-90%, 30-90, 40-90 or 50-90% of S1

The present invention may be implemented in a software routine as a subroutine of a slicer, which slices the CAD generated 3D model into closed shapes 200 of the green body. Thus, when the lateral edge is detected during the slicing process the saturation of binder is adjusted according to embodiments of the present invention as disclosed herein above. The adjustment of binder saturation may be part of the pre-processing prior to binder jet printing.

## Claims

1. A method (300) of controlling a binder jet printer (100), wherein the binder jet printer comprises:
a build box (102) with a powder bed (103);
a powder supply (104) for supplying the powder bed with powder;
a leveling device (105) configured to level the powder supplied to the build box from the powder supply;
a print head (106) for dispensing binder to the powder bed such that a green body (107) is formed by the dispensed binder and the powder in the powder bed;
**characterized in that** the method (500) comprises:
(501): supplying powder to the powder bed from the powder supply (104) and leveling the powder with the leveling device (105);
(502): dispensing binder by means of the print head (106) to the powder bed to form a layer of said green body, wherein the layer comprises at least one shape (200), which at least one shape (200) comprises binder and powder and is delimited by at least one edge (201, 201b), wherein the at least one shape (200) has a saturation of dispensed binder that is higher in an area closer to any one edge (201, 201b) of the shape (200) than the saturation of dispensed binder in an area further away (202) from any one edge (201, 201b).

2. A method (300) of controlling a binder jet printer according to claim 1, **characterized in that** the saturation of dispensed binder in an area of the shape (200) further away (202) from any one edge (201, 201b) is 1% to 99% of the binder saturation in an area closer to any one edge (201, 201b) of the at least one shape (200).

3. A method (300) of controlling a binder jet printer according to any one of the preceding claims, **characterized in that** the saturation of dispensed binder is constant in an area extending a predetermined distance (d) from any one edge (201, 201b) of the at least one shape (200).

4. A method of controlling a binder jet printer according to any one of claims 1 to 2, **characterized in that** the binder saturation decreases gradually (701, 801) with increasing distance from any one edge (201, 201b) of the at least one shape (200).

5. A method of controlling a binder jet printer according to claim 4, **characterized in that** the gradual decrease of binder saturation is a linear decrease (701).

6. A method of controlling a binder jet printer according to any of claim 1 to 2, **characterized in that** the binder saturation decreases in at least one step (601) at a predetermined distance from any one edge of the at least one shape.

7. A method of controlling a binder jet printer according to any of claim 1 to 2, **characterized in that** the binder saturation decreases in more than one step (901) at predetermined distances (d₂, d₂, d₃,d₄₎ from any one edge of the at least one shape (200).

8. A method of controlling a binder jet printer according to any one of claims 1 to 7, **characterized in that** the dispenser controller (111) is configured to adjust the saturation of dispensed binder by means of adjusting the volume of binder in each droplet (106a, 106b) dispensed to the powder bed (103).

9. A method of controlling a binder jet printer according to any one of claims 1 to 7, **characterized in that** the dispenser controller (111) is configured to adjust the saturation of dispensed binder in an area of the green body by means of varying the number of binder droplets dispensed to that area.

10. A method of controlling a binder jet printer according to any one of claims 1 to 7, **characterized in that** the dispenser controller (111) is configured to adjust the saturation of dispensed binder in an area of the green body by means of varying the frequency with which binder droplets are dispensed to that area.

11. A control unit (101) for a binder jet printer (100), wherein the binder jet printer comprises:
a build box (102) with a powder bed (103);
a powder supply (104) for supplying the powder bed with powder;
a leveling device (105) configured to level the powder supplied to the build box from the powder supply;
a print head (106) with a binder supply (109) for dispensing binder to the powder bed such that a green body (107) is formed by the dispensed binder and the powder in the powder bed;
**characterized in that** the control unit (101) comprises:
a dispenser controller (111) connected to the print head (106) and configured to control the dispensing of binder according to the method set out in any of the above claims.

12. A binder jet printer (100) comprising:
a build box (102) with a powder bed (103);
a powder supply (104) for supplying the powder bed with powder;
a leveling device (105) configured to level the powder supplied to the build box from the powder supply;
a print head (106) for dispensing binder to the powder bed such that a green body is formed by the dispensed binder and the powder in the powder bed;
**characterized in that** the binder jet printer (100) comprises a control unit (101) according to claim 11.

13. A non-transitory computer readable media (700) having information embodied therein, said information including instructions for a machine (701) to execute the method according to any one of claims 1 to 10.
